# EUROPEAN PATENT APPLICATION

(11) **EP 3 981 274 A1**
(43) Date of publication of application: **13.04.2022**
(21) Application number: 21201050.8
(22) Date of filing: 05.10.2021
(51) Int. Cl.: A41D 13/11, A41D 27/24, B29C 65/08, B29C 65/48, B29C 65/74, B29C 65/78, B29L 31/48

(54) **MACHINE FOR MANUFACTURING SURGICAL MASKS**

(30) Priority: 06.10.2020 IT 202000023536
(71) Applicant: MS2 S.r.l., 40057 Granarolo dell'Emilia (BO) (IT)
(72) Inventor: COLOMBO, Matteo, Granarolo dell'Emilia (BO) (IT)
(74) Representative: Manzella & Associati

(57) **Abstract**

The machine for making surgical masks (2) comprises means (10) for feeding a plurality of tape materials (23) adapted to be fed and superimposed in layers with continuous motion; means (30) for feeding a plastic-coated metal wire (3) between said layers of superimposed tape materials, near a longitudinal edge of the same layers of superimposed tape materials; means (16) for welding said layers of superimposed tape materials to define the profile of respective articles (20) having substantially rectangular shape; means (17) for cutting to size said articles (20); means (40) for joining a pair of elastic loops (4) to the longitudinal ends of said individual articles (20). Said means (40) for joining the elastic loops (4) are capable of applying a dab of glue material at each corner (26) of said articles (20), for fixing a respective end of said elastic loops (4), and subsequently folding said corner (26) over said respective end of the elastic loops (4) fixed by means of said dab of glue material.

## Description

The present invention relates to a machine and a method for making surgical masks and the resulting surgical mask.

### Background of the invention

In the health care sector, the use of surgical masks is known to avoid the dispersal of pathogens dispersed in the respiratory droplets, produced by the mouth and the nose. These devices, originally intended to be worn by health professionals as part of their activities, are currently also used to reduce the risk of spreading diseases in the population.

The known surgical masks are generally made by means of three superimposed layers, comprising in particular a layer of filtering material interposed between two layers of non-woven fabric. The three layers are welded along the peripheral edge by ultrasonic welding and usually have a plurality of pleats to allow the user to widen the mask to cover the surface of the face from the nose to the chin. Two elastic loops suitable to be positioned behind the ears or four fabric ties to be tied behind the head are fixed, by welding, at the longitudinal ends. A metal wire or other similar deformable stiffening element is also inserted along the upper edge, in use, to adapt the mask to the face.

Surgical masks can currently be produced by automatic machines operating with intermittent movement. These automatic machines generally feed from respective reels and superimpose the aforementioned three layers of fabric, insert the stiffening element, weld and cut the individual items to size and apply the elastic loops or fabric ties that are used to hold the mask on the user's face.

Patent application JP2020002483A illustrates a surgical mask known in the art and a related manufacturing method.

Patent application JP2018193656A illustrates a further surgical mask known in the art.

Patent application JP2020041254A illustrates, in turn, a further surgical mask known in the art.

Patent application WO97/10026A1 illustrates, in turn, a further surgical mask and a related manufacturing method.

Patent application WO2011/116173A2 illustrates, in turn, a further surgical mask.

Patent application WO2016/099304A1 illustrates a further method for manufacturing surgical masks.

Patent application GB2566544A illustrates a method and apparatus for applying an elastic loop to a film of plastic material.

A problem that arises in the production of known surgical masks is given by the limited productivity of the automatic machines used to make them. The intermittent operation of these machines in fact means that their productivity is generally of approximately one hundred units per minute. Conversely, since it is a disposable product, the need to maintain continuity of supplies and therefore to ensure high productivity at economic costs is evident.

### Disclosure

The aim of the present invention is to solve the aforementioned problems by devising a machine which allows the making of surgical masks with a high operating speed, so as to ensure high productivity.

As part of this aim, a further object of the invention is to provide a machine that allows the making of highly resistant surgical masks.

Another object of the invention is to provide a machine that allows the making of surgical masks with a proportionately economic cost.

A further object of the invention is to provide a machine for making surgical masks with a simple constructive and functional conception, with reliable operation, which is versatile in use, and relatively inexpensive.

The aforementioned objects are achieved, according to the present invention, by the machine for making surgical masks according to claim 1.

The machine for making surgical masks comprises means for feeding a plurality of tape materials suitable to be fed and superimposed in layers with continuous motion; means for feeding a plastic-coated metal wire between said layers of superimposed tape materials, near a longitudinal edge of the same layers of superimposed tape materials; means for ultrasonic welding of said layers of superimposed tape materials to define the profile of respective articles of substantially rectangular shape; means for cutting to size said articles having a substantially rectangular shape; means for joining a pair of elastic loops to the longitudinal ends of said individual articles.

According to the present invention, said means for joining the elastic loops are adapted to apply a dab of glue material at each corner of said articles, for fixing a respective end of said elastic loops, and to subsequently fold said corner above said respective end of the elastic loops fixed by means of said dab of glue material.

Preferably, said tape materials comprise at least one layer of filtering material interposed between an external non-woven fabric layer and an internal non-woven fabric layer.

Advantageously, said means for joining the elastic loops comprise a first carousel member and a second counter-rotating carousel member, adapted to be rotated with continuous movement along parallel horizontal axes.

Advantageously, said second carousel member is peripherally equipped with a plurality of manipulator devices adapted to receive respectively a single article from said first carousel member.

Preferably, each said manipulator device comprises a plate of rectangular shape having a work surface arranged on a plane tangent to the peripheral circumference of the second carousel member and sized so as to receive a single article thereon.

Preferably, said first carousel member is able to impart an angular rotation of 90° to said products, during the transfer to said second carousel member, so that the same products transferred to said second carousel member appear with the longitudinal dimension parallel to the axis of said second carousel member.

Preferably, said plate has at the longitudinal sides, near the four vertices of said work surface, respective gripper members adapted to elastically hold said single article.

Preferably, said gripper members are movable alternatively, on command of actuator means, between a disengagement position and a working position in which they are able to elastically clamp said single article on said working surface of the plate.

Preferably, said actuator means consist of a rod controlled by cam means, which allow the opening of said gripper members contrasting relative elastic means.

Preferably, respective gripping members of said elastic loops intended to be made integral with said single article held on said work surface are associated with said plate at the four vertices of said work surface.

Preferably, said gripping members are angularly rotating according to respective axes orthogonal to said work surface of the plate, between a first position for gripping respective ends of said elastic loops and a second position rotated towards the inside of said work surface to bring said ends of each elastic loop at respective corners of said article.

Preferably, said gripping members have a movable jaw that can be opened and closed, in contrast to elastic means, on command of actuator means.

Preferably, folding means, suitable to form a bend on the portion of the loop held between said gripping members, is adapted to act, in a suitable phase relationship with the clamping carried out by the same jaws, on said elastic loops gripped by said jaws of the gripping members.

Preferably, said means for joining the elastic loops comprise cutting means capable of cutting to size said elastic loops externally to said gripping members.

Preferably, said means for joining the elastic loops comprise means adapted to apply a dab of glue material at each corner of said individual articles, for fixing a respective end of said elastic loops.

Preferably, said means for joining the elastic loops comprise folding means adapted to fold said corners of the article over said ends of the elastic loops fixed on said article by said dabs of glue material, so as to rivet the elastic loops.

The present invention also relates to a method for making surgical masks comprising the steps of feeding in advance with continuous movement and superimposing a plurality of tape materials in layers; inserting a plasticized metal wire between said layers of superimposed tape materials, near a longitudinal edge of the same layers of superimposed tape materials; assembling said layers of superimposed tape materials by ultrasonic welding to define the profile of respective articles of substantially rectangular shape; cutting said articles of substantially rectangular shape to size; applying a dab of glue material at each corner of said articles for fixing a respective end of a pair of elastic loops; folding said corner over said respective end of the elastic loops attached by said dab of glue material.

Advantageously, the method for making surgical masks provides for feeding a pair of elastic loops along the transverse sides of said articles; gripping said elastic loops at suitably spaced points by means of a pair of gripping members; forming a bend on the portion of said elastic loops held between said gripping members by folding means; cutting said elastic loops to size externally to said gripping members; angularly rotating said gripping members to bring said ends of the elastic loops at respective corners of said articles; subsequently applying said dab of glue material at each corner of said articles.

Advantageously, the method for making surgical masks provides for feeding said articles in an ordered sequence to a carousel member rotated with continuous motion and peripherally equipped with a plurality of manipulator devices suitable for retaining the same articles on a work surface arranged on a plane tangent to the peripheral circumference of said carousel member; placing said pair of elastic loops alongside said articles held by said manipulator devices, along said transverse sides; bringing said elastic loops into continuous motion with the same tangential speed of said carousel member.

The present invention further relates to a surgical mask comprising a substantially rectangular product formed by a plurality of layers obtained from superimposed tape materials and assembled by welding along the peripheral edges of said product; a plasticized metal wire inserted along a longitudinal edge of said product; a pair of elastic loops fixed to the longitudinal ends of said product.

According to the present invention, the ends of said elastic loops are fixed by means of a dab of glue material at respective corners of said product and said corners are folded over said respective ends of the elastic loops.

The machine according to the invention achieves the aim of carrying out the making of surgical masks with a high operating speed, thanks to the inventive idea of carrying out the making with continuous motion at high speed.

This allows an equally high productivity and therefore the proportional reduction of the cost of production of the surgical masks.

### Description of drawings

The details of the invention will become more evident from the detailed description of a preferred embodiment of the machine for making surgical masks, illustrated by way of example in the accompanying drawings, wherein:
Figure 1 shows a front view of the machine for making surgical masks according to the present invention;
Figure 2 shows a corresponding plan view thereof;

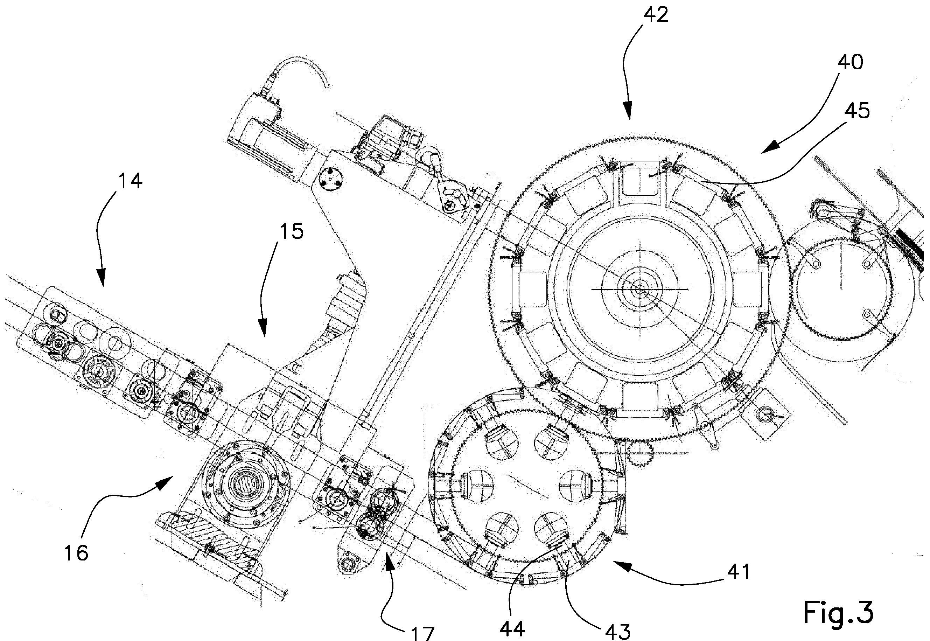

Figure 3 shows an enlarged front view of an operating area of the machine;

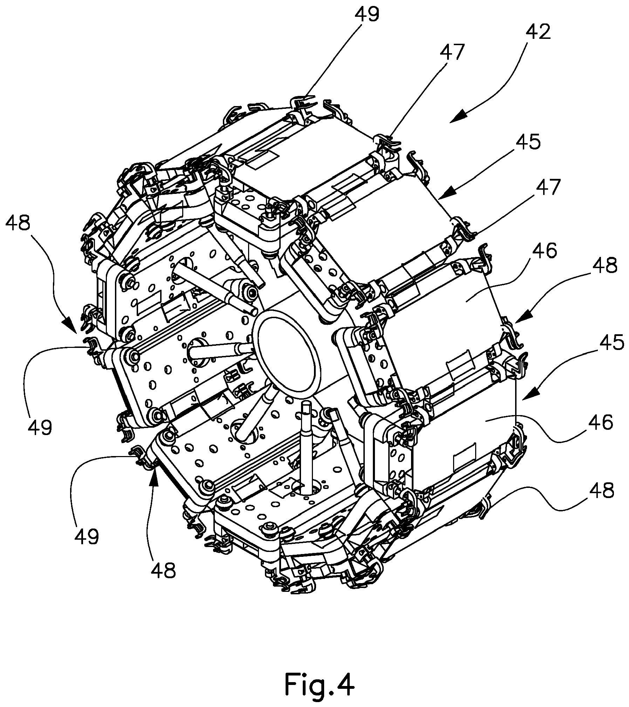

Figure 4 shows a perspective view of a member for applying the elastic loops to the masks;

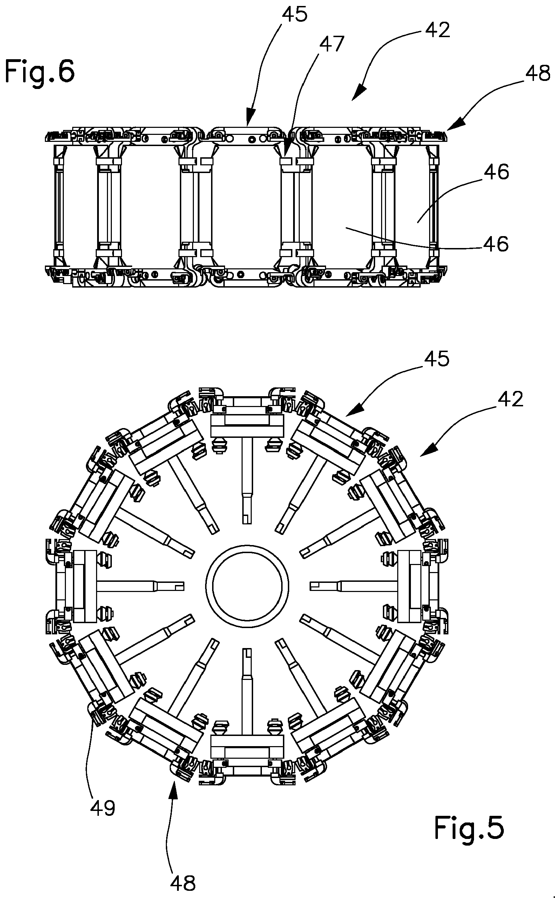

Figures 5 and 6 show respectively a front view and a plan view of said member for applying the elastic loops;

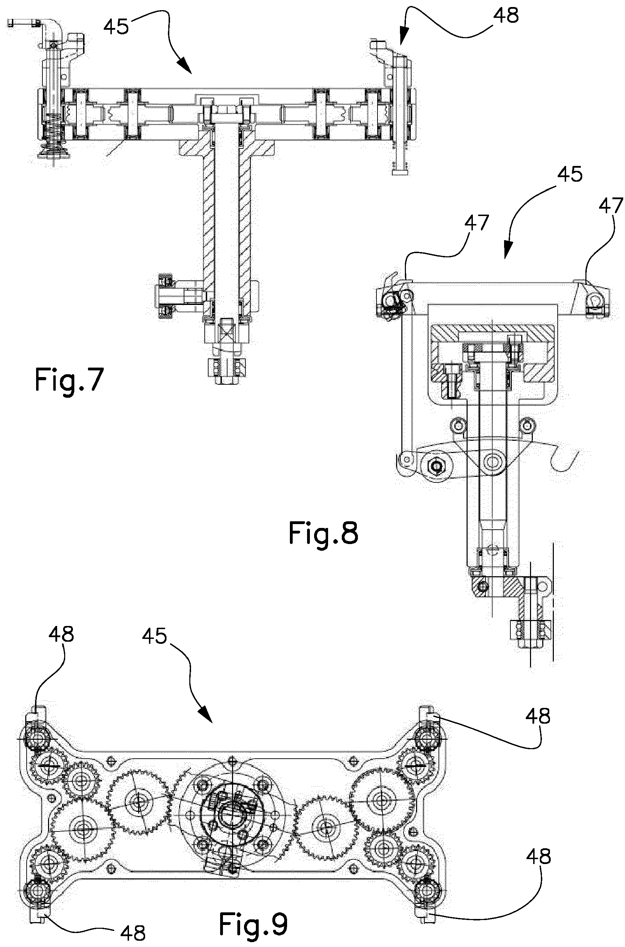

Figures 7, 8 and 9 show detailed views of said member for applying the elastic loops, in different operating steps;

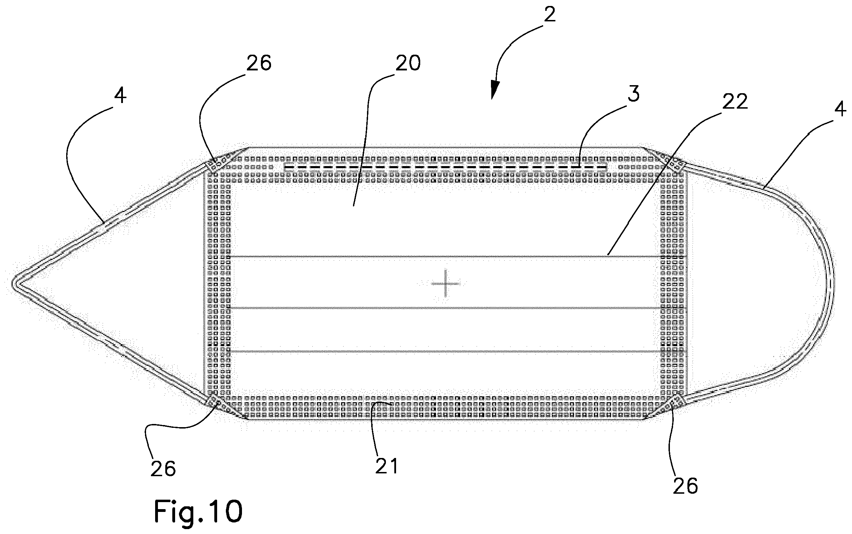

Figure 10 shows a plan view of a surgical mask made by the machine according to the invention.

### Best mode

With reference to these figures, the machine for making surgical masks 2 is indicated as a whole with the reference number 1.

The surgical masks 2 are made up of an article 20 formed by a plurality of portions of tape materials superimposed in layers and welded along the peripheral edge by means of a welding line 21, for example by ultrasonic welding. In particular, this product 20 comprises at least one layer of filtering material interposed between two layers of non-woven fabric. The superimposed layers suitably have a plurality of pleats 22 to allow the user to widen the mask in order to cover the face surface from the nose to the chin. A stiffening metal wire 3 is inserted along a longitudinal edge, designed to be warped manually, at the time of use, to adapt the mask 2 to the face.

Two elastic loops 4 are also fixed to the longitudinal ends, as better specified below, suitable for being positioned behind the ears to hold the mask on the face.

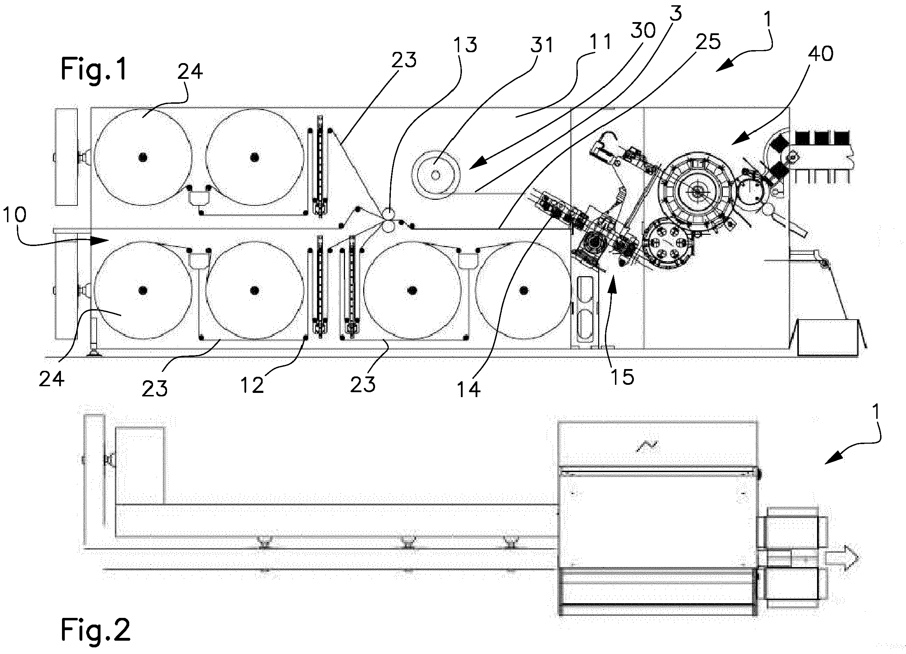

The machine 1 for making surgical masks 2 comprises means 10 for feeding said tape materials suitable to be fed with continuous motion. In particular, said tape materials, indicated with number 23 in Figure 1, are supplied by respective reels 24 mounted in line, with parallel horizontal axes, at a side 11 of the machine, in order to be easily replaced.

The tape materials 23 are unwound by means of a plurality of transmission rollers 12 until they overlap between a pair of counter-rotating rollers 13, so as to form a single multilayered tape 25 which unwinds with continuous motion on a substantially horizontal plane.

Means 30 for feeding a plasticized metal wire 3, which unwinds from a relative reel 31, works downstream of the counter-rotating rollers 13 which overlap the belts. The metal wire 3 conveniently passes through a straightening assembly 14 and is then inserted, suitably positioned, between said superimposed layers of the multi-layer tape 25.

The continuous movement of the tape materials 23 and of the plasticized metal wire 3 takes place on command of per se known motor members and not shown in the drawings. In particular, said continuous advance movement of the tape materials 23 and of the plasticized metal wire 3 has an equal speed at least at the reciprocal coupling areas.

The strip 25 provided with the plasticized metal wire 3 then engages a welding and cutting assembly 15 equipped with ultrasonic welding means 16 and with cutting means 17 known in the art. The welding means 16 is capable of producing in succession said welding lines 21 which define the profile of respective articles 20 having a substantially rectangular shape, on the tape 25 provided with the plasticized metal wire 3. The single articles 20 are separated from each other by the cutting means 17, consisting for example of a pair of counter-rotating blades.

An assembly 40 for joining a pair of elastic loops 4 is provided at the longitudinal ends of said individual articles 20, downstream of the welding and cutting assembly 15. The elastic loops 4 are fed to the joining assembly 40 by a relative reel by means of suitable transmission means. The joining assembly 40 comprises a first carousel member 41 and a second carousel member 42 counter-rotating according to parallel rotation axes. More precisely, the joining assembly 40 comprises a first carousel member 41 for transferring and orienting the articles 20, revolving around a horizontal axis. The first carousel member 41 is adapted to collect the individual articles 20 and to transfer them in an oriented position to the second carousel member 42, by which the respective elastic loops 4 are applied to the individual articles 20.

The transfer member 41 bears, distributed peripherally to the carousel, a plurality of gripping means 43 substantially comprising a pair of gripper members suitable for gripping the ends of the articles 20. The gripper members are held by a support 44 revolving angularly around an axis radial to the carousel. This revolving support 44 is controlled in such a way as to impart an angular rotation of 90° to the articles 20, during the transferring step.

The member 42 for applying the elastic loops 4, in turn, bears, distributed peripherally to the carousel, a plurality of manipulator devices 45, which are adapted to receive respectively individual articles 20 from the transfer member 41.

These manipulator devices 45 substantially comprise a plate 46 of rectangular shape having a work surface arranged on a plane tangent to the peripheral circumference of the carousel and sized so as to receive a single article 20 thereon. It should be noted that the articles 20 transferred to the carousel member 42 for applying the elastic loops 4 have their longitudinal dimension aligned with the axis of this second carousel 42, following the angular rotation, which the transfer member 41 was subjected to.

The plate 46 has at the longitudinal sides, near the four vertices of the work surface, respective gripper members 47, angularly rotating along axes parallel to said longitudinal sides of the work surface. Said gripper members 47 are movable alternately, on command of underlying actuator means not shown, between a disengagement position and a working position in which they are capable of elastically clamping the article 20 on the working surface of the plate 46. The actuator means consists, for example, of a rod controlled by special cam means, which allows the opening of the gripper members 47 contrasting relative elastic means.

Respective members 48 for gripping the elastic loops 4, intended to be made integral with each article 20, are also associated with the plate 46, as well at four vertices of the work surface. The gripping members 48 are angularly rotatable according to respective axes orthogonal to the working surface of the plate 46. In particular, the gripping members 48 have a jaw 49 movable in opening and closing, contrasting suitable elastic means, on command of underlying actuator means, not shown.

In practice, as specified below, a pair of elastic loops 4 is fed along the transverse sides of the article 20 rotated, with continuous movement, by each manipulator device 45 of the carousel member 42. Each elastic loop 4 is gripped, at appropriately spaced points, by a pair of said gripping members 48 by opening the respective jaw 49. Folding means, suitable to form a bend on the portion of the loop 4 held between said gripping members 48, on the elastic loop 4 gripped by the jaws 49 of the gripping members 48, are adapted to act in a suitable phase relationship with the clamping performed by said jaws 49. Appropriate cutting means then cut to size the elastic loops 4 outside the gripping members 48.

In a suitable phase relationship, the gripping members 48 are rotated angularly to bring the ends of each elastic loop 4 to the corners 26 of the article 20.

The joining assembly 40 also comprises means suitable for applying a dab of glue at each corner 26 of said individual articles 20, for fixing a respective end of said elastic loops 4. Suitable folding means are adapted to subsequently fold the corners 26 of the article 20 above the ends of the elastic loops 4 fixed to the article by said dabs of glue, so as to rivet the same elastic loops 4.

The surgical masks 2 thus finished are sent to the exit by means of a conventional conveyor belt.

The operation of the machine for making surgical masks is easily understood from the above description.

The machine feeds in advance with continuous movement and superimposes in layers a plurality of tape materials and inserts a plasticized metal wire 3 between said layers of superimposed tape materials, near a longitudinal edge of the same layers of superimposed tape materials. The layers of superimposed web materials are then joined by said ultrasonic welding to define the profile of respective articles 20 having a substantially rectangular shape. These substantially rectangular shaped articles 20 are cut to size and fed in an ordered sequence to the first carousel member 41 which rotates them angularly by 90°, so as to arrange them with the longitudinal dimension parallel to the rotation axis of the same first carousel member 41, and to transfer them to the second carousel member 42.

According to the present invention, the machine then applies a dab of glue at each corner 26 of the articles 20, for fixing a respective end of a pair of elastic loops 4. Each corner 26 of the articles 20 is folded over a respective end of the elastic loops 4 previously fixed by means of a dab of glue.

To this end, in particular, the articles 20 are transferred in sequence from the first carousel member 41 to respective manipulator devices 45 of the second carousel member 42 and held on the working surface of the plates 46 by the gripper members 47. The plates 46 of the manipulator devices 45 are placed side by side on the opposite transverse sides by respective elastic loops 4, moved continuously with the same tangential speed as the second carousel member 42.

The elastic loops 4 are gripped, at suitably spaced points, by the jaws 49 of a pair of gripping members 48. Before the clamping of the jaws 49 is completed, suitable folding means forms a bend on the portion of the loops 4 held between the gripping members 48. Once the elastic loops 4 have been cut to size outside the gripping members 48 by which they are held, the gripping members 48 are rotated angularly to bring the ends of each elastic loop 4 to the corners 26 of the article 20, in the points where the glue material will be applied and then the same corners 26 will be fold by suitably shaped folding means.

The described machine for making surgical mask achieves the aim of carrying out the making of surgical masks with a high operating speed, so as to ensure a corresponding high productivity.

In particular, it has been verified that the making machine according to the invention allows to increase productivity, for example up to six hundred surgical masks per minute.

This is made possible thanks to the inventive idea of operating the machine for making surgical masks with continuous motion at high speed. To this end, the elastic loops are fixed to the article by applying a dab of glue. The joining of the elastic loops by welding, for example by ultrasonic welding, would in fact be incompatible with a continuous motion at high speed, due to the time required by this welding operation.

Obviously, the high productivity achieved in this way allows the making of surgical masks having proportionately low cost, as well as ensuring the continuous supply of these sanitary devices.

A prerogative of the surgical masks packaged by the machine object of the invention is the fact that they have a mechanical strength that is significantly higher than that of traditional surgical masks. The assembling of the elastic loops by applying a point of glue material and the following folding of the corners of the article, in order to reinforce the gripping area of the elastic loops, makes the tear resistance particularly high.

The machine for making surgical masks described by way of example is subject to numerous modifications and variations according to the various requirements.

For example, it is possible to provide that the surgical mask includes, in a substantially known manner, a fourth layer of material suitable for preventing the penetration of liquids. This fourth layer is suitably provided by a further reel which unwinds in parallel to the reels which supply said first three layers of the surgical mask.

Furthermore, the plasticized metal wire can be replaced by another equivalent deformable stiffening element fit to adapt the mask to the face; similarly, the elastic loops may be replaced, in a known way, by four fabric ties to be tied behind the head.

In the practical embodiment of the invention, the used materials, as well as the shape and the dimensions, may be modified depending on needs.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. A machine for making surgical masks, comprising
means (10) for feeding a plurality of tape materials (23) adapted for being fed and superimposed in layers with continuous motion;
means (30) for feeding a plastic-coated metal wire (3) between said layers of tape materials superimposed near a longitudinal edge of the same layers of superimposed tape materials;
means (16) for ultrasonic welding of said layers of superimposed tape materials in order to define the profile of respective articles (20) having a substantially rectangular shape;
means (17) for cutting to size said manufactured articles (20) having substantially rectangular shape;
means (40) for joining a pair of elastic loops (4) to the longitudinal ends of said single articles (20);
said means (40) for joining the elastic loops (4) being capable of applying a dab of glue material at each corner (26) of said articles (20), for fixing a respective end of said elastic loops (4), and subsequently folding said corner (26) over said respective end of the elastic loops (4) fixed by means of said dab of glue material.

2. The machine as in claim 1, wherein said means (40) for joining the elastic loops (4) comprise a first carousel member (41) and a second counter-rotating carousel member (42), said first carousel member (41) being capable of receiving said articles (20) in line and of transferring the same articles (20) in an oriented position to said second carousel member (42), by means of which said elastic loops (4) are applied to said articles (20).

3. The machine as in claim 2, wherein said second carousel member (42) is peripherally equipped with a plurality of manipulator devices (45) each comprising a rectangular plate (46) having a work surface arranged on a plane tangent to the peripheral circumference of said second carousel member (42) and sized so as to receive a single article (20) thereon.

4. The machine as in claim 2 or 3, wherein said first carousel member (41) and said second carousel member (42) are rotated with continuous motion along parallel horizontal axes.

5. The machine as in claim 3, wherein said second carousel member (42) comprises, at each of said manipulator devices (45), a plurality of gripping members (48) suitable for gripping respective ends of said elastic loops (4), so that the same ends of the elastic loops (4) are arranged at a respective corner (26) of said articles (20).

6. The machine as in claim 5, wherein said gripping members (48) are angularly rotatable according to respective axes orthogonal to said work surface of the plate (46), between a first position for gripping respective ends of said elastic loops (4) and a second position rotated towards the inside of said work surface for bringing said ends of each elastic loop (4) at respective corners (26) of said article (20).

7. The machine as in claim 6, wherein said gripping members (48) are associated with said plate (46) respectively at four vertices of said work surface of said plate.

8. The machine as in claim 6 or 7, wherein said means (40) for joining the elastic loop (4) comprises a folding means suitable for forming a bend on the portion of said elastic loops (4) held between said gripping members (48), before the angular rotation of the same gripping members (48) in said second position rotated towards the inside of the said work surface of the plate (46).

9. A method for making surgical masks, **characterized in that** it comprises the steps of
a. feeding with continuous motion and superimposing in layers a plurality of tape materials (23);
b. inserting a plastic-coated metal wire (3) between said layers of superimposed tape materials, near a longitudinal edge of the same layers of superimposed tape materials;
c. joining said layers of superimposed tape materials by means of ultrasonic welding in order to define the profile of respective articles (20) having substantially rectangular shape;
d. cutting to size said articles (20) having substantially rectangular shape;
e. applying a dab of glue material at each corner (26) of said products (20), for fixing a respective end of a pair of elastic loops (4);
f.folding said corner (26) over said respective end of the elastic loops (4) fixed by means of said dab of glue material.

10. A surgical mask comprising an article (20) having substantially rectangular shape formed by a plurality of layers obtained from superimposed tape materials and joined by welding along the peripheral edges of said article (20); a plastic-coated metal wire (3) inserted along a longitudinal edge of the said article (20); a pair of elastic straps (4) fixed to the longitudinal ends of said product (20), **characterized in that** the ends of said elastic straps (4) are fixed by means of a dab of glue material at respective corners (26) of said article (20) and **in that** said corners (26) are folded over said respective ends of the elastic loops (4).
